# EUROPEAN PATENT APPLICATION

(11) **EP 2 573 694 A1**
(43) Date of publication of application: **27.03.2013**
(21) Application number: 12185313.9
(22) Date of filing: 20.09.2012
(51) Int. Cl.: G06F 17/50, G06K 9/00

(54) **Conversion method and system**

(30) Priority: 23.09.2011 GB 201116440
(71) Applicant: Airbus Operations Limited, Bristol, Bristol BS99 7AR (GB); Apsys SA, 31700 Blagnac (FR); AIRBUS OPERATIONS (S.A.S), 31060 Toulouse (FR); Queen Mary And Westfield College, University Of London, London E1 4NS (GB); The University of York, Heslington, York YO10 5DD (GB)
(72) Inventor: Papadopoulos, Christopher, Bristol, Bristol BS99 7AR (GB); Heckman, Jean Pierre, 31700 Blagnac (FR); May, Nicholas, 31300 Toulouse (FR); Zhang, Qianni, London London E1 4NS (GB); Lin, Xinyu, London, London E1 4NS (GB); Izquierdo, Ebroul, London, London E1 4NS (GB); Lisagors, Olegs, York, Yorkshire YO10 5DD (GB); Trouilloud, Jean, 31700 Blagnac (FR)
(74) Representative: Scott, Alistair Francis

(57) **Abstract**

A computer-implemented method for converting a representation of a system into a behaviour model of the system is provided. The method can be used to convert a schematic diagram into a behavioural model.

## Description

### FIELD OF THE INVENTION

The present invention relates to a method for converting a representation of a system into a model of a system.

### BACKGROUND OF THE INVENTION

In systems designs, it is often necessary to convert a schematic diagram or representation of a system, such as a circuit diagram, into a model.

Schematic diagrams, or designs, are mostly only available in hardcopies or in digital image formats. Modern computer-aided design tools require schematic models in specifically defined file formats. Currently, in order to preserve, re-use and modify schematic designs in hardcopies or digital images, an engineer must manually import the designs into a computer in a machine-compatible model format. This process requires substantial time, resource and expertise.

### SUMMARY OF THE INVENTION

The invention is defined by the appended independent claims to which reference should now be made. Optional features are defined in the appended dependent claims.

### BRIEF DESCRIPTION OF THE DRAWINGS

Embodiments of the invention will now be described with reference to the accompanying drawings, in which:
Figure 1 is a screenshot of a graphical user interface for implementing the invention;
Figure 2 is a flow diagram showing the method of obtaining a schematic model from an image of a schematic diagram;
Figure 3 is a diagram showing step of a pre-processing method carried out on a schematic diagram;
Figure 4 is a diagram showing a schematic image undergoing a Hough transform;
Figure 5 is a diagram showing an algorithm for a general component detection method;
Figure 6 is diagram showing progressive stages of the component detection method shown in Figure 4; and
Figure 7 is a diagram showing stages of component detection using a feature vector method.

### DETAILED DESCRIPTION OF EMBODIMENT(S)

Although the invention has been described above with reference to one or more preferred embodiments, it will be appreciated that various changes or modifications may be made without departing from the scope of the invention as defined in the appended claims.

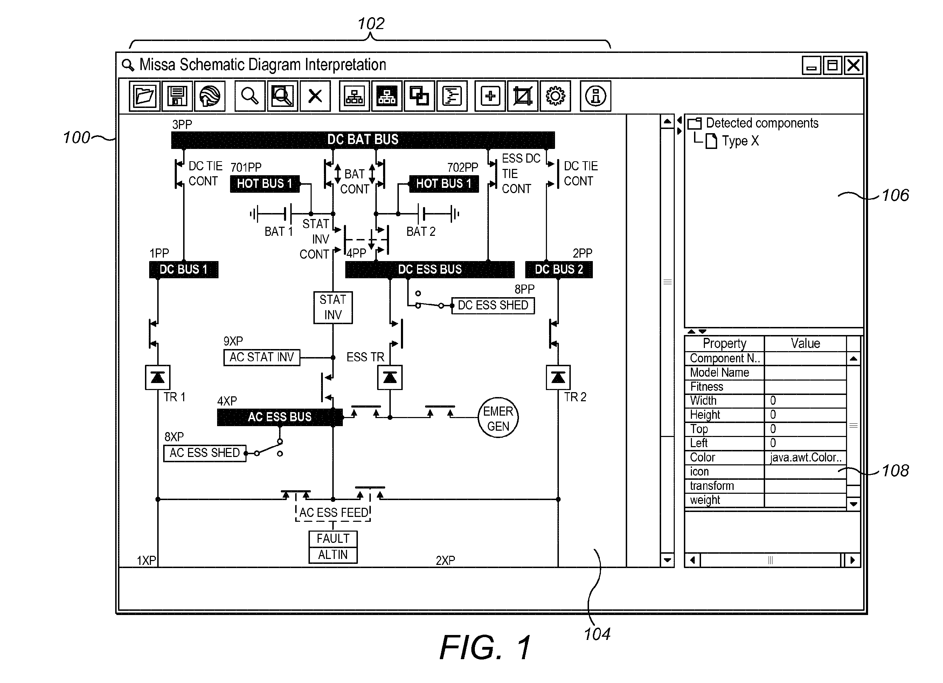

Referring to the drawings, Figure 1 shows a screenshot 100 of an example graphical user interface for implementing the invention. At the top of the screen, there are several buttons 102 that provide different functionalities. A graphic frame 104 on the left shows the input image or result image. A component frame 106 on the top right shows detected component families and instances in a tree structure. An attribute frame 108 on the bottom right shows properties of one selected component in the tree structure of the component frame. The property values in this frame can be modified by the user for manual correction.

The invention can be embodied in a tool which consists of five main modules: component library import, preliminary processing, Hough transform-based component detection, feature-based component detection, and model export.

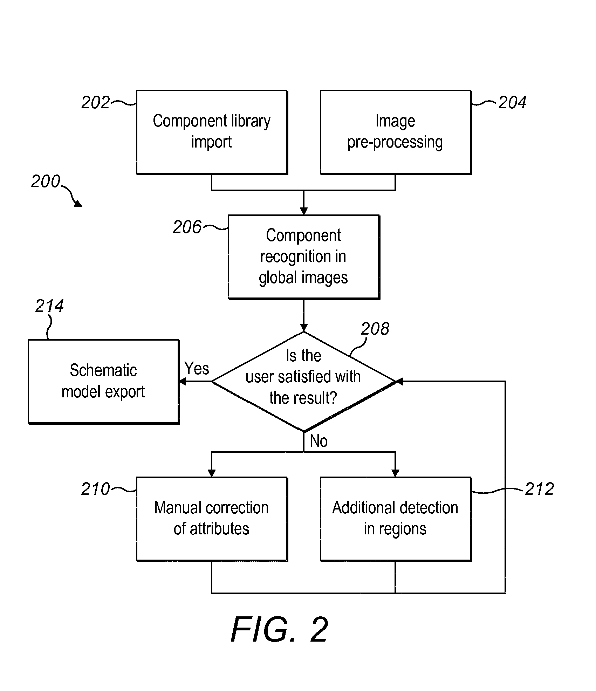

Figure 2 shows, in a flow diagram 200, the work flow in a general schematic-to-model conversion process. In other words, the flow diagram 200 shows the steps involved in converting a schematic image into a schematic model in a format suitable for use by a design engineer. The first step 202 in a general conversion process is to select a library of components and a schematic image for recognition. In one embodiment, a library of components is required to follow the Cecilia OCAS file format with a '.exp' suffix. In other embodiments, a component library may be in a different file format. The library can be a list of components that are selected and exported directly from a different computer program, for example OCAS. Any schematic image that contains components that exist in the imported library can be used as an input image. If the user notices any component in the target image (that is, the schematic model resulting from the conversion) which is not included in the existing library, the tool provides a cropping function that allows the user to crop an area from the image and add a new component into the library. The user will be asked to provide some properties for the new component such as the component's name.

The library includes properties relating to each of a plurality of components. Such properties include a component name, an image showing how the component might be portrayed in a schematic diagram, the number and form of any inputs and outputs of the component, the functional and abnormal states of the component, and the failed events of the component that can be triggered. A description or definition of the functional state of the component defines how the component behaves during its normal use. For example, this might define how the function of the component affects the input, resulting in the output. A description or definition of abnormal states of the component or of possible failure events that could occur in or to the component defines what might cause the component to fail, and the consequences of that component failing. For example, the definition might state that the component is capable of functioning when supplied with a current up to a predetermined maximum but, at currents exceeding that predetermined maximum, the component shuts down in order to avoid damage occurring. The behavioural information about each component includes details regarding how the component functions and behaves when connected in a system. The behavioural information may include information relating to how the inputs of the component are transformed by logic operators to affect the value of the outputs, how the values of the inputs may cause the component to change its functional configuration state, how the functional configuration state may affect the value of the outputs, how the triggering of a failure event represents how the component might fail, how the component failure affects the component output values, how the values of the inputs may affect the normal or failed behaviour of the component, and how the component outputs might affect the system. In one embodiment, the nominal and failed behaviour of the component is captured in a language called AltaRica, developed by Labri. The information relating to the inputs, states, events, and the code that describes the relationships between the inputs, states, events and how this affects the values of the outputs of the components forms the behavioural information of the component. As in any formalism, the inputs, constants, variables, and outputs have a data type definition. The basic data type definition can be of Boolean, Integer, Real and Enumerated types. The structured data type definition can be any number of combinations of the basic data types. In one embodiment, each component has a single set of behavioural information associated with it. In other embodiments, one or more components have more than one set of behavioural information associated with them. A user is able to select a set of behavioural information for each component based on the requirements of the system or the analysis that they are intending to perform.

The behavioural information relating to each component includes nominal behaviour attributes and failure behaviour attributes. The nominal behaviour attributes describe the way the component functions in a system. The failure behaviour attributes describe conditions that would lead to a failure condition of the component.

The library is editable by a user, so that if needed, a user is able to enter a new set of behavioural information for one or more components. In one embodiment, if, during testing of a system by simulation, a component is caused to fail, for example as a result of too great a current passing through it, then the behavioural information output for that component will be updated as a consequence of the failure. In this way, the library can be considered to be dynamic.

The schematic image to be used as an input image can be coloured, grey-scale or binary. Any colour or grey-scale information will be removed, since the image is converted to binary (black and white) in a pre-processing step 204. The image is then treated as black and white.

The user is then given the option to choose which algorithm is to be used for vision-based component recognition 206. In one embodiment, the user can select from two algorithms: Hough transform-based component recognition and feature-based component recognition. In an alternative embodiment, the tool incorporates more algorithms which can be selected by the user if needed. Both of the above-mentioned component recognition algorithms adopt some schemes for handling invariant detection in different orientations.

The initial detection of components is carried out at the whole image level. The resulting image is displayed in the graphic frame, and the detected component is listed in the component frame in a tree structure. The user is prompted to check whether the component recognition is correct (step 208). If the user finds errors in the detected components, for example if the recognition algorithm has incorrectly identified a component, then the incorrectly-identified component can be corrected, or deleted from the tree altogether. The recognition algorithm improves its recognition of the components in systems each time an identification correction is made.

When the user selects one component in the component tree, its properties are displayed in the attribute frame. If the user notices any incorrect property values, these can be corrected manually (210).

In some cases, components are more difficult to detect at a whole-image scale. The tool allows the user to select a small region in the input image and gives a list of all potential components in the region for the user to select the correct one (212).

When the user is satisfied that the component detection has been completed successfully, conversion to the model can be carried out (214).

The resulting model is a behavioural model which can be used by an engineer to build and/or test a system. The resulting model can be exported in a suitable file format such as XML. In one embodiment, the result is exported in a compatible .exp format for Cecilia OCAS.

### Hough Transform Method for Component Detection

In one embodiment of the present invention a general Hough transform algorithm is implemented for component detection. The Hough transform is a technique which can be used to isolate features of a particular shape within an image. Because it requires the desired features to be specified in some parametric form, the classical Hough transform is most commonly used for the detection of regular curves such as lines, circles and ellipses. A general Hough transform, instead, is employed in applications where a simple analytic description of a feature is not possible. In the case of component detection in schematic diagrams, there is no standard shape or pattern for each component. Therefore, only the general Hough transform is suitable. The main advantage of the Hough transform technique is that it is tolerant of gaps in feature-boundary descriptions and is relatively unaffected by image noise.

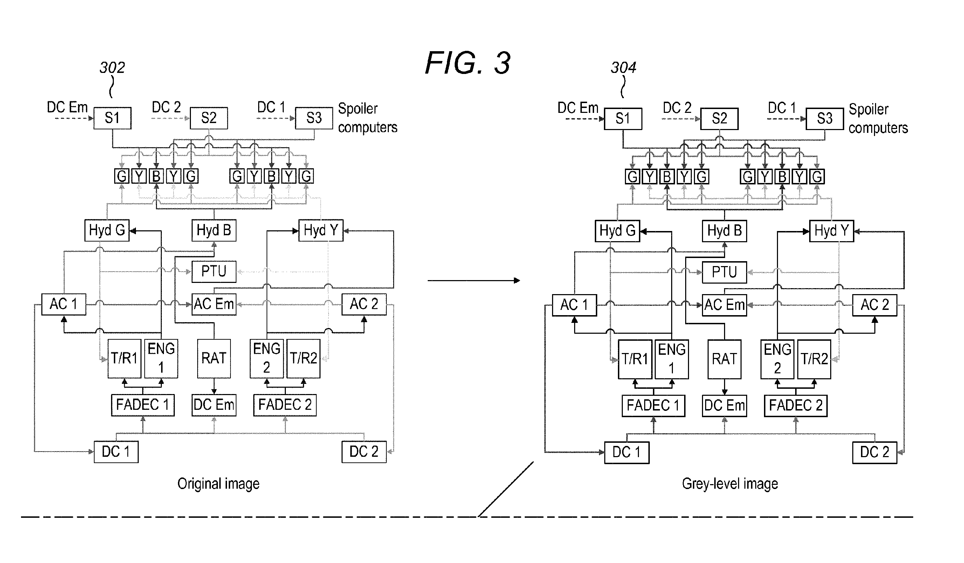

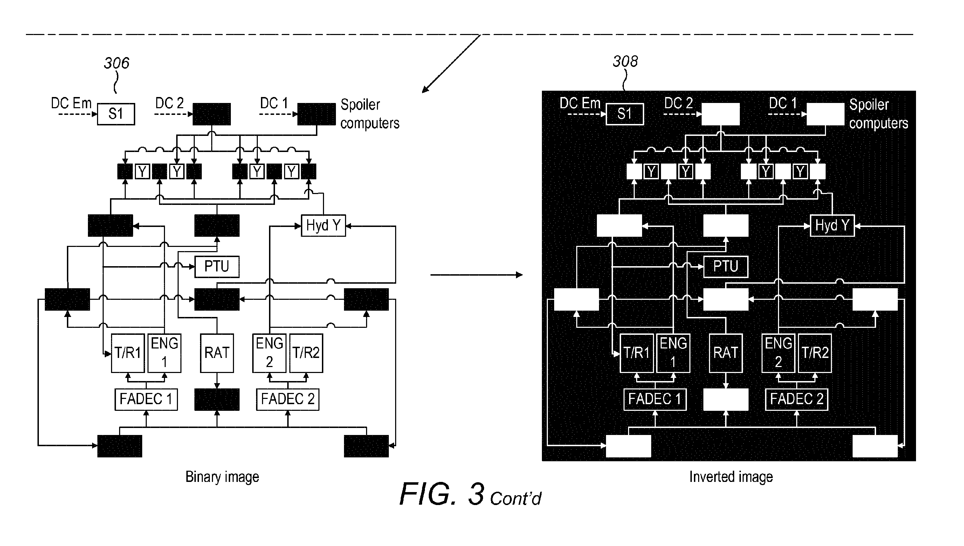

A few preliminary processing steps are required before the Hough transform-based detection is carried out. Figure 3 shows an example of these preliminary steps being carried out in a pre-processing method. Firstly, if the image 302 is in colour, the colour image is converted into a greyscale image 304. Secondly, the greyscale image is converted into a binary (black and white) image 306. Thirdly, the binary image is inverted 308 in order for the Hough transform to be performed.

Once an inverted image is obtained, a general Hough transform is performed on the image, and a relevance score is given for points which are potentially similar to the target component icon.

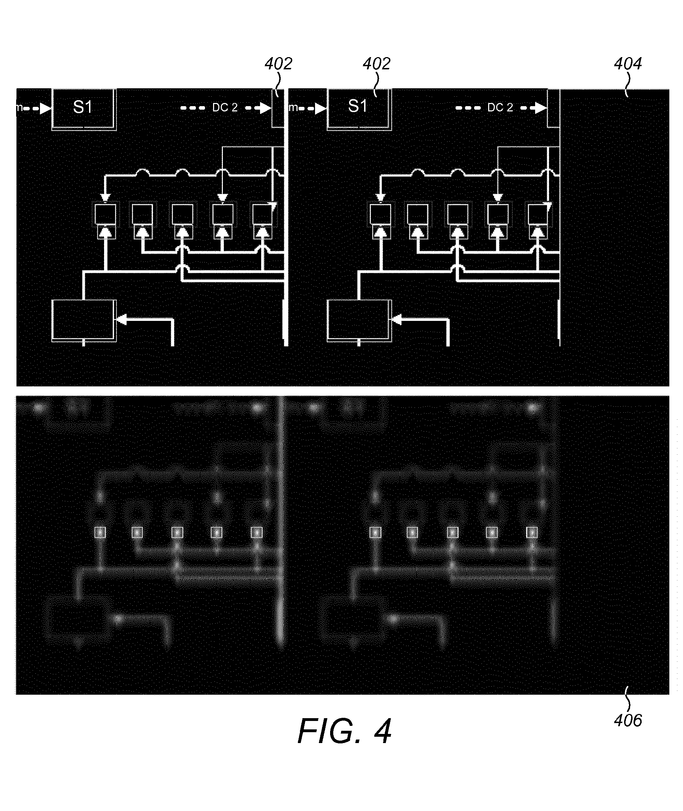

Figure 4 shows an example of detected components 402 in the original image space 404 and in the transformed space 406.

### Feature-Based Matching Method for Component Detection

An input schematic diagram may be hand-drawn or taken from a scanner, and it is likely that the input image will be affected by noise and degradation. Reference symbols of components in the component library (represented as an image) have fixed scale and orientations. These images may also be degraded.

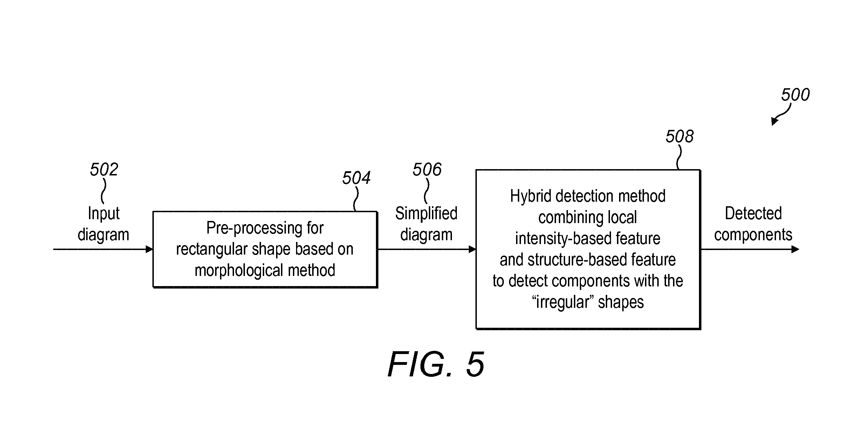

Figure 5 shows steps of an algorithm 500 for the feature-based component detection method. That algorithm will now be discussed in greater detail.

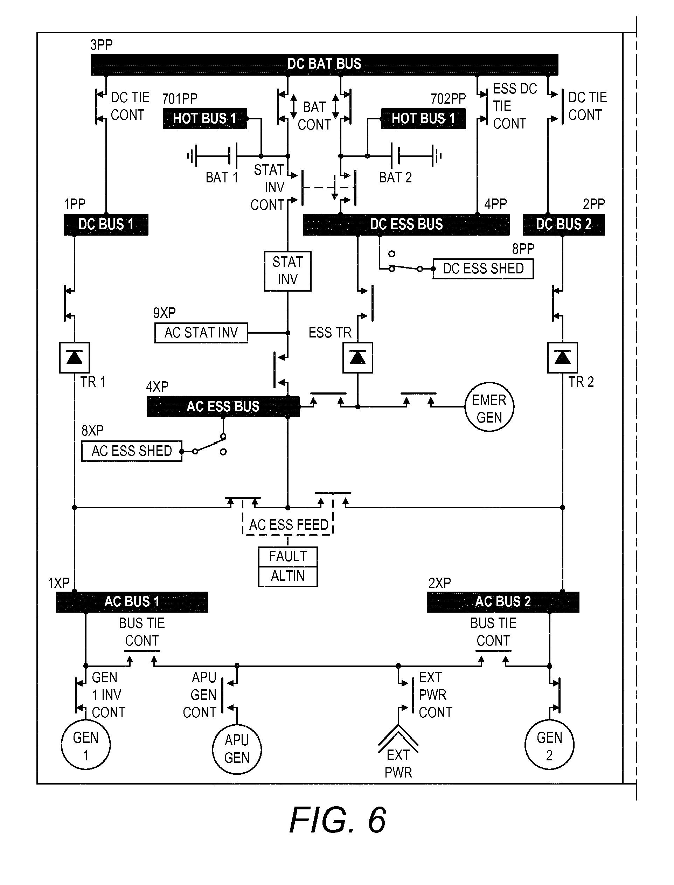

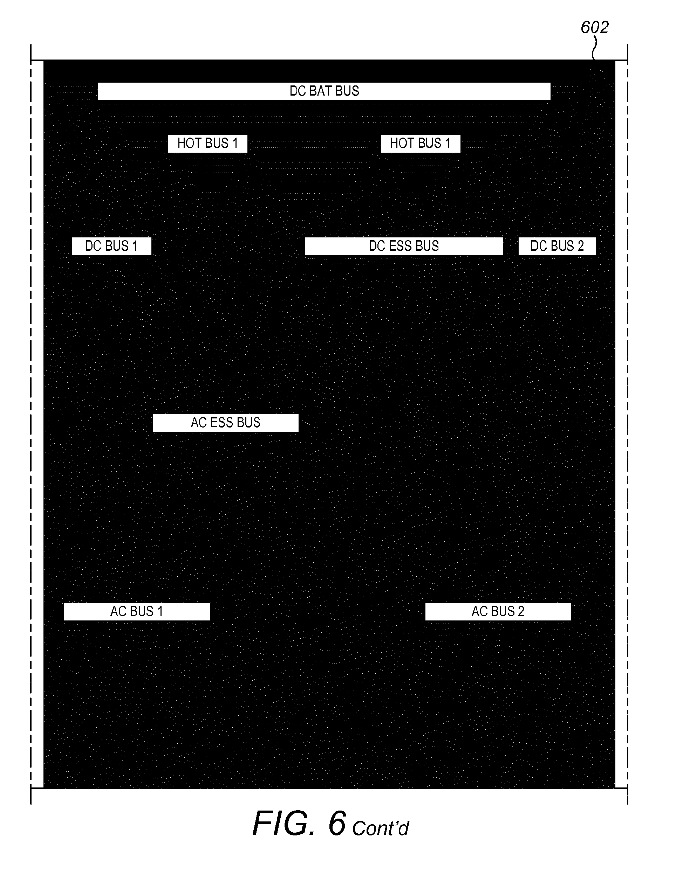

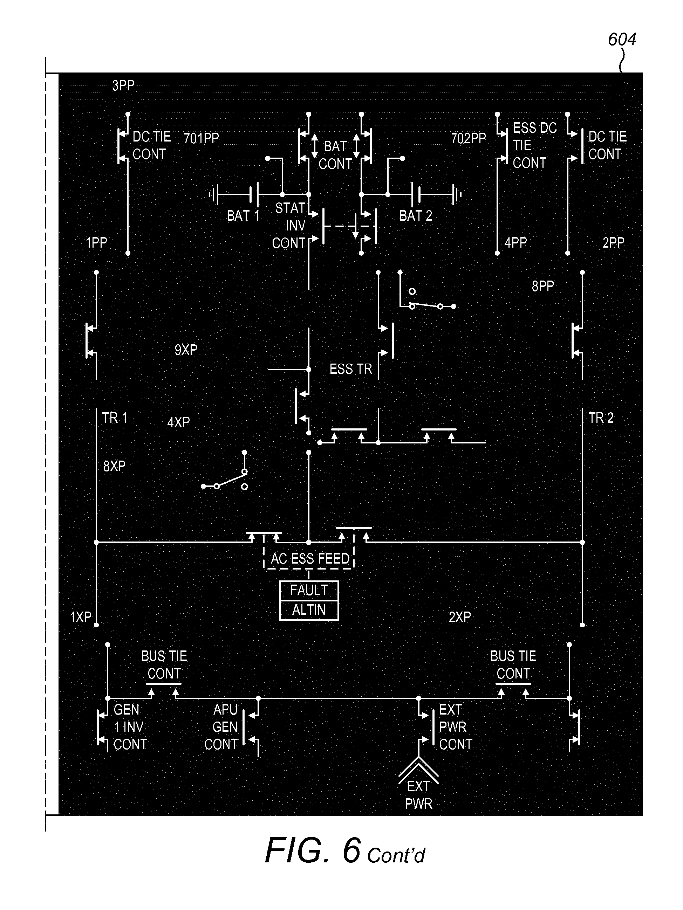

The input image 502 first undergoes a pre-processing step 504 to detect rectangular shapes. Components which are rectangular in shape are detected and segmented based on morphological dilation and erosion. The result of this step is a simplified image 506. Figure 6 shows the intermediate 602 and final 604 results of regular-shape detection process.

The next step is the detection of components based on feature vectors. The simplified image obtained from the previous step undergoes a hybrid detection method 508 which combines local intensity-based feature recognition and structure-based feature recognition to detect components with "irregular" shapes.

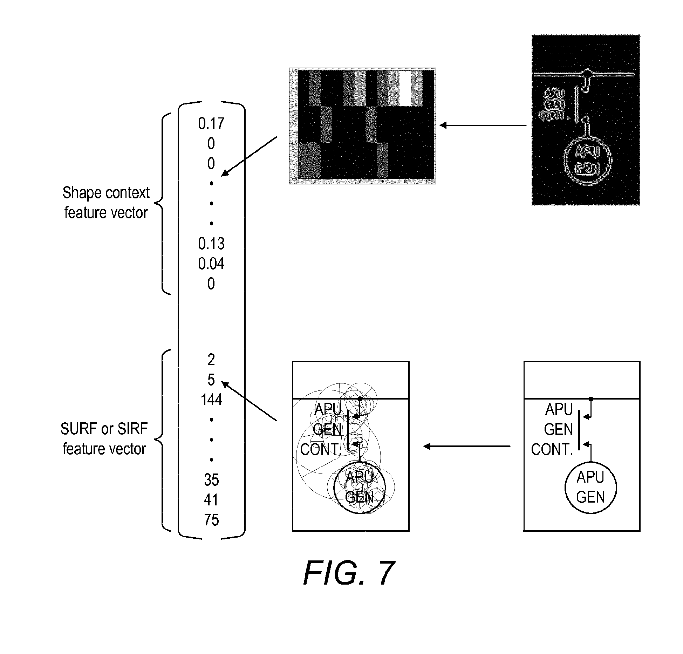

The detection of irregularly-shaped components is based on a combination of a local 'speeded up robust feature' (SURF) and a shape context-like feature. Figure 7 illustrates the combination of feature vectors to improve the accuracy of the detection. SURF features can capture statistics of local intensity, while shape context feature can capture structural characteristics. By combining these two types of features for each point, the accuracy of matching between contour points from an input image and a target/resulting image can be improved. For each contour point, the combined feature vector will be calculated, and matching will be done between points from reference/input and target/resulting images. Only points with high similarity will be kept. After that, a "clustering" step will be performed to "segment" the components based on distances between candidate pixels.

One skilled in the art will appreciate that component recognition techniques other than those described above can be used for detecting and recognising components in the input schematic.

In one embodiment, the present invention can be implemented in a Java-based application. The invention provides a schematic-to-model transformation tool (S2MT) for the automatic translation of hydraulic images into model formats compatible with Cecilia OCAS.

In order to enhance the recognition performance as much as possible, the proposed design of the S2MT tool provides several options for the user to develop the best conversion performance. The tool comprises two different vision-based algorithms for the recognition process, together with orientation invariant solutions, user feedback and revision functions, library modification, and global/regional recognition. In addition, an interactive graphical user interface is provided to assist the process.

So far, the invention has been described in terms of individual embodiments. However, one skilled in the art will appreciate that various embodiments of the invention, or features from one or more embodiments, may be combined as required. It will be appreciated that various modifications may be made to these embodiments without departing from the scope of the invention, which is defined by the appended claims.

## Claims

1. A computer-implemented method for converting a representation of a system into a model of the system, the method comprising the steps of:
receiving the representation of the system;
providing a library of component models, each component model being associated with a component, and each component model including an image associated with the component;
indentifying a component image in the representation of the system that corresponds to an image in the library of component models; and
generating the model of the system based on the or each detected component image;
wherein the model includes a description of nominal behaviour attributes and failure behaviour attributes of the or each component.

2. A method according to claim 1, wherein the representation comprises an image.

3. A method according to any of the preceding claims, wherein the model of the system comprises a behavioural model.

4. A method according to any of the preceding claims, wherein the library comprises behavioural information associated with each component.

5. A method according to any of the preceding claims, wherein the identifying step comprises a Hough transform-based recognition algorithm.

6. A method according to any of the preceding claims, wherein the identifying step comprises a feature-based recognition algorithm.

7. A method according to any of the preceding claims, further comprising the step of querying a user as to whether or not the model of the system is acceptable.

8. A method according to claim 7, further comprising the step of inviting a user input to correct an unacceptable model.

9. A method according to any of the preceding claims, further comprising the step of querying a user as to whether or not the identification of component models in the identifying step is correct.

10. A method according to claim 9, further comprising the step of inviting the user to correctly identify incorrectly-identified component models.

11. A method according to any of the preceding claims, wherein the library is updatable to allow modification of the nominal behaviour attributes and the failure behaviour attributes relating to one or more of the components.

12. A computer-readable medium bearing computer program code which, when executed, performs the method of any one of the previous claims.

13. A model of a system generated by the method of any one of claims 1 to 11.

14. Apparatus for converting a representation of a system into a model of the system, the apparatus comprising;
means for receiving the representation of the system;
means for receiving a library of component models, each component model being associated with a component, and each component model including an image associated with the component; and
a model generator for generating the model of the system based on the or each detected component image;
wherein the model includes a description of nominal behaviour attributes and failure behaviour attributes of the or each component.

15. Apparatus according to claim 14, wherein the model of the system comprises a behavioural model, and the library comprises behavioural information associated with each component.
